# EUROPÄISCHE PATENTANMELDUNG

(11) **EP 1 172 950 A2**
(43) Veröffentlichungstag der Anmeldung: **16.01.2002**
(21) Anmeldenummer: 01440171.5
(22) Anmeldetag: 14.06.2001
(51) Int. Cl.: H04B 10/158

(54) **Optischer Empfänger**

(30) Priorität: 15.07.2000 DE 10034451
(71) Anmelder: ALCATEL, 75008 Paris (FR)
(72) Erfinder: Franz, Bernd, 74336 Brackenheim (DE)
(74) Vertreter: Rausch, Gabriele, Dr.

(57) **Zusammenfassung**

Die Erfindung betrifft einen optischer Empfänger mit einem O/E-Wandler (1), insbesondere einer Fotodiode, und Mitteln zur Extraktion eines Taktsignals (6) aus einer optisch übertragenen NRZ-Datenfolge. Um elektrische Komponenten, insbesondere zur nichtlinearen Signalverarbeitung (2), bei der Taktsignalextraktion einzusparen und sehr hohe Bitraten bei großer spektraler Reinheit des Taktsignals (6) zu erreichen, ist vorgesehen, dass die Mittel einen dem O/E-Wandler (1) vorgeschalteten Optokoppler (12) und ein an den Optokoppler (12) angeschlossenes optisches Filter (13) zur Abspaltung eines Teiles des optischen Signalspektrums der NRZ-Datenfolge sowie eine Auswerteschaltung umfassen.

## Beschreibung

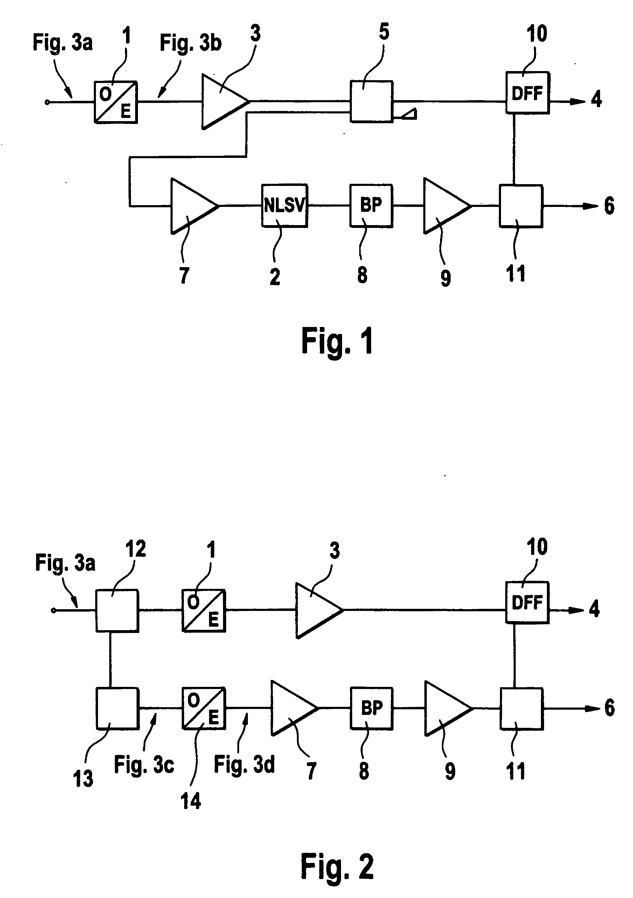

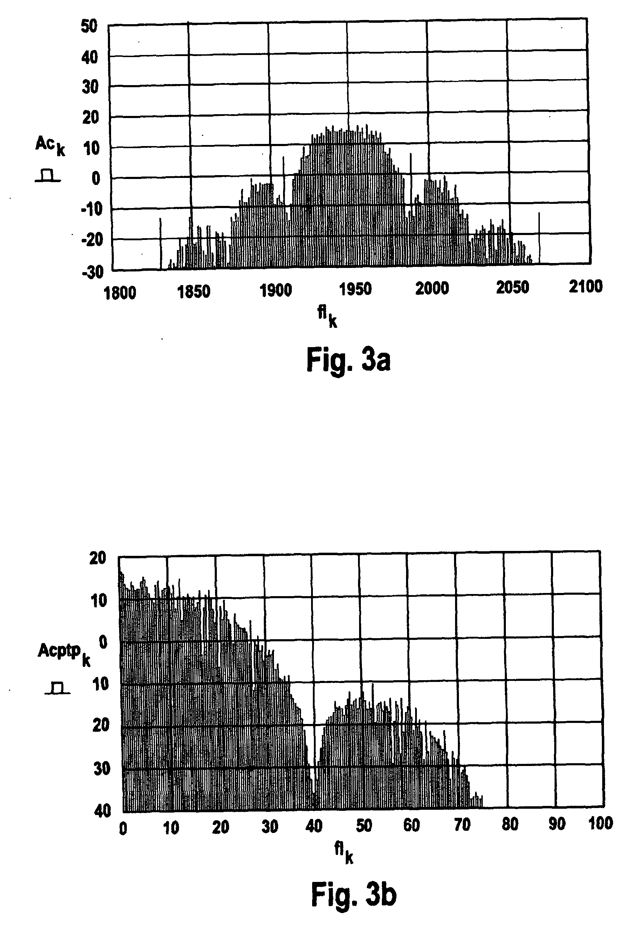

Die Erfindung betrifft einen optischen Empfänger gemäß dem Oberbegriff des Anspruchs 1. Derartige optische Empfänger gehören zu den Grundkomponenten der optischen digitalen Nachrichtenübertragung. Dabei ist neben der Regeneration des eigentlichen Nutzsignals auch die Extraktion des Taktsignals aus der optisch übertragenen NRZ (nonreturn to zero)-Datenfolge erforderlich. Diese Extraktion erfolgt bei einer in Fig. 1 dargestellten bekannten Ausführungsform mittels nichtlinearer Signalverarbeitung 2. Fig. 3a zeigt das optische Spektrum einer mit dem NRZ-Signal modulierten digitalen Datenfolge vor dem O/E (optischelektrisch)-Wandler 1. Hierbei wird eine endliche Transmitterbandbreite vorausgesetzt. Im O/E-Wandler 1 insbesondere einer Fotodiode, wird das E (elektrische)-Feld des optischen Spektrums (Fig. 3a) mit seiner konjugiert komplexen Komponente multipliziert. Dadurch geht jedoch die Taktlinie verloren. Bei dem in Fig. 3a gezeigten Beispiel sind dies die starken Spektrallinien, die eine Taktfrequenz von 40 GHz repräsentieren. Aus Fig. 3b ist ersichtlich, dass ein 40 GHz-Signal nach der O/E-Wandlung nicht mehr vorhanden ist. Um die Taktinformation dennoch aus dem elektrischen Signal zu extrahieren, ist von dem elektrischen Signal ein Taktkanal abgezweigt, in dem eine nichtlineare Signalverarbeitung 2 erfolgt. Nachteilig bei dieser bekannten Taktextraktion ist vor allem der erhebliche schaltungstechnische Aufwand, der durch die elektrischen Komponenten des Taktzweiges verursacht ist. Insbesondere bei sehr hohen Bit-Raten im Bereich 80 Gbit/s oder 160 Gbit/s ergeben sich erhebliche Schwierigkeiten bei der Herstellung der elektrischen Komponenten.

Der Erfindung liegt die Aufgabe zugrunde, die oben genannten Nachteile zu beseitigen und einen optischen Empfänger der gattungsgemäßen Art hinsichtlich der Extraktion des Taktsignals aus einer optisch übertragenen NRZ-Datenfolge zu vereinfachen. Darüber hinaus wird eine größere spektrale Reinheit des Taktsignals, d.h. weniger Jitter, angestrebt.

Die Aufgabe wird erfindungsgemäß mit den kennzeichnenden Merkmalen des Anspruchs 1 gelöst. Das Grundprinzip der beanspruchten Lösung besteht darin, einen Taktzweig zur Regeneration des Taktsignals nicht von dem O/E-gewandelten Signal sondern von dem optischen Ausgangssignal abzuleiten. Dazu sind ein dem O/E-Wandler vorgeschalteter Optokoppler und ein an diesen angeschlossenes optisches Filter zur Abspaltung eines Teiles des optischen Signalspektrums der NRZ-Datenfolge sowie eine Auswerteschaltung vorgesehen. Auf diese Weise lassen sich die elektrischen Komponenten zur nichtlinearen Signalverarbeitung einsparen. Stattdessen erfolgt eine All-Optical-Taktableitung. Die dazu erforderlichen optischen Komponenten, nämlich Optokoppler und optisches Filter lassen sich zumindest bei sehr hohen Bitraten leichter herstellen als elektrische Komponenten zur nichtlinearen Signalverarbeitung.

Gemäß Anspruch 2 wird das optische Signalspektrum nach der All-Optical-Taktableitung O/E-gewandelt, wobei wegen des eingangsseitigen optischen Teilspektrums auch das elektrische Spektrum, das Taktsignal enthält. Durch die Abspaltung des Taktzweiges vor dem O/E-Wandler bleibt darüber hinaus eine größere spektrale Reinheit der regenerierten Daten erhalten, d.h. die Jitterneigung lässt sich auf diese Weise reduzieren.

Die Erfindung wird nachfolgend anhand eines Ausführungsbeispiels näher erläutert: Es zeigen
- Fig. 1: eine schematische Darstellung eines optischen Empfängers gemäß dem Stand der Technik,
- Fig. 2: eine ebensolche Darstellung eines erfindungsgemäßen Ausführungsbeispiels und
- die Fig. 3a bis 3d: dem Empfängerschemata zugeordnete Signalverläufe.

Bei dem in Fig. 1 veranschaulichten Empfänger ist nach einem O/E-Wandler 1 und einem Verstärker 3 in den elektrischen Zweig zur Aufbereitung der Nutzdaten 4 ein Verzweigungsmodul 5 eingesetzt, an welches ein Taktzweig zur Extraktion eines Taktsignals 6 angeschlossen ist. Der Taktzweig besteht aus seriell hintereinander geschalteten elektrischen Komponenten. Diese Komponenten umfassen im wesentlichen einen Verstärker 7, eine nichtlineare Signalverarbeitung 2, ein Bandpaß-Filter 8 oder PLL (phase locked loop) und einen weiteren Verstärker 9. Ausgangsseitig sind der Nutzdatenzweig und der Taktzweig in üblicher Weise über einen digitalen Flip-Flop 10 und einen Taktverteiler 11 miteinander verbunden. Im Zusammenhang mit den Figuren 3a und 3b ist ersichtlich, dass das optische Spektrum - Fig. 3a - einer, insbesondere mit einem NRZ (nonreturn to zero)-Signal modulierten digitalen Datenfolge nach der O/E-Wandlung 1 als elektrisches Spektrum - Fig. 3b - erscheint, welches die Taktlinie - in dem Ausführungsbeispiel bei 40 GHz - nicht mehr enthält. Um das Taktsignal 6 zu regenerieren, erfolgt in dem Taktzweig eine nichtlineare Signalverarbeitung 2 des elektrischen Spektrums.

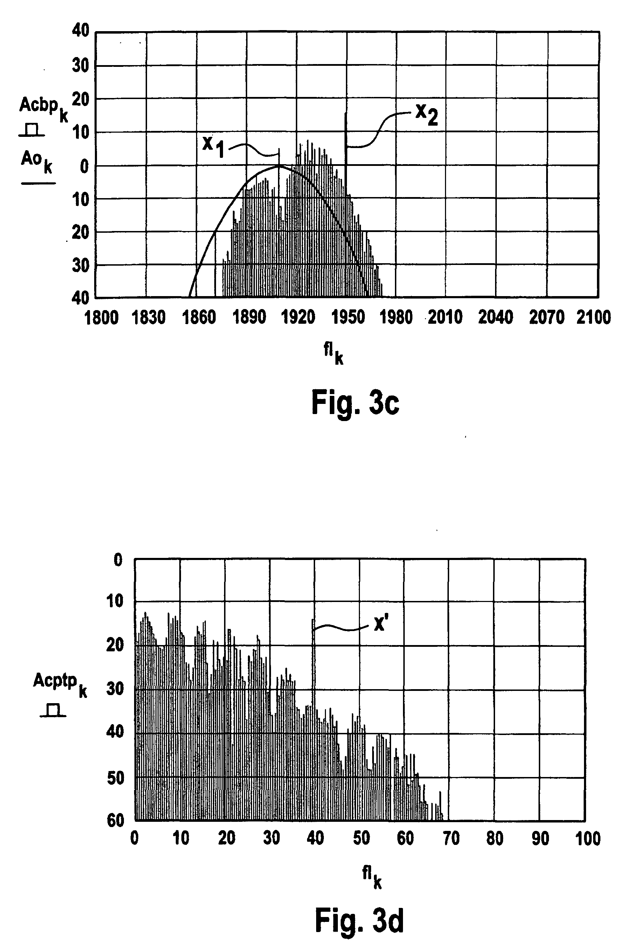

Von diesem Stand der Technik unterscheidet sich die in Fig. 2 veranschaulichte Lösung prinzipiell dadurch, dass bereits das optische Eingangssignal verzweigt wird, wobei nur ein Teil des optischen Spektrums für die Extraktion des Taktsignals 6 verwendet wird. Die Verzweigung wird über einen Optokoppler 12 realisiert und die Reduktion auf einen Teil des optischen Spektrums mittels eines optischen Filters 13. Auf diese Weise resultiert ausgangsseitig des Filters 13 ein in Fig. 3c charakterisiertes optisches Spektrum. Die spektrale Zusammensetzung hängt dabei von der in diesem Beispiel gaußkurvenförmigen Filtercharakteristik Aoₖ ab, welche derart gewählt ist, dass mindestens eine Taktlinie x₁ zusammen mit der optischen Trägerfrequenz x₂ im Durchlassband des optischen Filters 13 zu erwarten ist. Das gefilterte Signal - Fig. 3 c - wird einem O/E-Regenerator 14 zugeführt, wodurch ein elektrisches Spektrum - Fig. 3 d - resultiert, welches eine der Differenz der optischen Spektrallinien x₁ und x₂ entsprechende elektrische Taktlinie x' - im Ausführungsbeispiel bei 40 GHz - enthält.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung gebrauch machen. Beispielsweise können andersgeartete optische Filter, insbesondere Fabry-Perot-Filter, eingesetzt werden.

## Patentansprüche

1. Optischer Empfänger mit einem O/E-Wandler (1), insbesondere einer Fotodiode, und Mittel zur Extraktion eines Taktsignals (6) aus einer optischen übertragenen NRZ-Datenfolge,
**dadurch gekennzeichnet,**
**dass** die Mittel einen dem O/E-Wandler (1) vorgeschalteten Optokoppler (12) und ein an den Optokoppler (12) angeschlossenes optisches Filter (13) zur Abspaltung eines Teiles des optischen Signalspektrums der NRZ-Datenfolge sowie eine Auswerteschaltung umfassen.

2. Optischer Empfänger nach Anspruch 1,
**dadurch gekennzeichnet,**
**dass** die Auswerteschaltung einen O/E-Regenerator (14), insbesondere eine Fotodiode, eine Verstärkeranordnung und Mittel zur Filterung, insbesondere ein Bandpassfilter (8) oder ein PLL (phase locked loop), aufweist.
